Europäisches Patentamt

European Patent Office

Office européen des brevets

(19)

(11) Publication number: **0 136 096**
A2

(12) # EUROPEAN PATENT APPLICATION

(21) Application number: 84305871.0

(22) Date of filing: 29.08.84

(51) Int. Cl.⁴: **B 32 B 3/12**, C 09 J 5/00

(30) Priority: 21.09.83 US 534445

(43) Date of publication of application: 03.04.85
Bulletin 85/14

(84) Designated Contracting States: DE FR GB

(71) Applicant: **Ford Aerospace & Communications
Corporation, 3939 Fabian Way, Palo Alto, Cal. 94303 (US)**

(72) Inventor: **Stonier, Roger A., 5981 Pilgrim Avenue, San
Jose California 95129 (US)**

(74) Representative: **Messulam, Alec Moses, A. Messulam &
Co. 24 Broadway, Leigh on Sea Essex SS9 1BN (GB)**

(54) Method of making a honeycomb structure.

(57) A technique for making a honeycomb structure includes
bonding a less than totally cured composite skin (16) to a
possibly contoured honeycomb core (8). The composite skin
(16) comprises fibers and a resin chosen to maximize the
strength and stiffness of the skin (16) when cured. Non-
contiguous adhesive fillets (5) are prepositioned onto faying
surfaces of the honeycomb core (8). The adhesive (5) is pre-
selected, independently of the preselection of the resin, to
maximize the strength of the bond between the skin (16) and
the core (8).

A thin, lightweight scrim cloth (14) is interposed between
the starting skin (16) and the filleted core (8). The scrim cloth
(14) prevents resin from flowing into the core (8) and allows a
safe place for the intermingling of resin and adhesive (5). The
assemblage is heated under pressure, cocuring the adhesive
(5) and the resin. The fillets (5) are preferably prepositioned
on surfaces (10) by means of applying an adhesive-coated
fabric to the faying surface, heating the fabric-covered core
(8) so that some of the adhesive (5) flows out of the fabric (1)
and into the core (8) at a region near the faying surface, cooling
the core (8) so that the only substance remaining adhered to
the core edges (10) is the adhesive fillets (5).

- 1 -

## METHOD OF MAKING A HONEYCOMB STRUCTURE

This invention relates to a method of making a honeycomb struture by bonding a skin to a honeycomb core.

U.S. Patent No. 4,284,457, for which the present inventor was the principal inventor, relates to a method for bonding a skin member to honeycomb core. In this patent the skin member is a homogeneous material such as a metal, or, if a fiber reinforced plastic composite, a precured one.

U.S. Patent No. 4,249,976 shows the bonding of a thermosetting skin to a honeycomb core in which an intermediate continuous layer of thermoplastic adhesive is interposed between the starting skin and the core.

The thermosetting skin in the patent must reliably flow and cure at a lower temperature than the melt temperature for the adhesive layer. Furthermore, the adhesive layer of the patent must be a thermoplastic because of the need to have a sharply defined melting point.

Other attempts have also been made to bond a less than totally cured composite, e.g., comprising fiberglass and resin, directly onto a honeycomb core.

The following six U.S. Patent references - 3,391,056; 4,054,477; 4,254,171; 4,353,947; 3,784,395 and 3,106,503 all discuss bonding skins onto honeycomb core using 1) starting skins of homogeneous materials; and 2) a continuous intermediate layer of adhesive, or material providing an adhesive, interposed between the skin and the core.

The reference numerals used below refer to the drawings which will later be described in detail.

According to the present invention, there is provided a method of making a honeycomb structure by bonding a composite skin member onto a honeycomb core, characterised by the steps of: forming several non-contiguous fillets 5 of less than totally cured adhesive on a faying surface 10 of the core 12; placing a less than totally cured composite sheet 16 containing a resin against the faying surface 10; and heating the core 12 and composite sheet 16 to effect a final cure to each of the adhesive and the resin.

The fact that the starting skin 16 is less than totally cured offers two advantages with respect to the prior art methods using precured composite starting skins: 1) the starting skin 16 is formable, and therefore can be readily bonded to a core 8 faying surface 10 which is contoured; and 2) a processing step is eliminated, because the curing of the skin 16 and the bonding of the skin 16 to the core 8 are accomplished in the same processing step.

The honeycomb structure 50 produced by this method is advantageously lighter in weight than prior art methods because no intermediate continuous layer of adhesive is employed between the skin 16 and the honeycomb core 8. Rather, a set of noncontiguous adhesive fillets 5 is used. This weight saving is critical for many applications, e.g., in aircraft and spacecraft.

The adhesive fillets 5 are preferably positioned on the faying edges 10 of the honeycomb walls 12 by partially curing an adhesive-coated fabric material 1 onto each surface 10 of the honeycomb, cooling the resulting structure until the adhesive 1 becomes brittle, then peeling the adhesive coated fabic off the surfaces 10, leaving adhesive fillets 5 strategically positioned for later use in bonding to the skins 16.

This invention premits the optimization of the bonding strength of the adhesive 5 for purposes of bonding the skin 16 to the core 8, while simultaneously permitting the independent optimization of the resin 34 for stiffening and strengthening the skin 16.

A thin, lightweight scrim cloth 14 is preferably interposed between the skin 16 and the core 8 prior to the cocuring step. Scrim cloth 14 acts as a barrier to prevent the unwanted flow of resin 34 along honeycomb walls 12, thereby avoiding the weight penalty associated with prior art techniques in which additional resin had to be employed in the skin to maintain the optimum resin-to-fiber ratio in the skin while allowing for resin flow. Scrim cloth 14 also prevents the diluting of the bond strength of adhesive 5 by resin 34 in the vicinity of the core walls 12.

Compared to the method in U.S. Patent 4,249,976 the present invention has two further advantages, namely thermoplastic adhesive does not provide as strong a bond as the thermosetting adhesives 5 used in the present invention; and the curing point of the thermoplastic adhesive of this prior art patent is generally higher than for the thermosetting adhesives illustrated in the present specification, necessitating special tooling.

The present invention offers at least three major advantages over the prior art technique of bonding a less than totally cured composite directly onto a honeycomb core, as follows: 1) The prior art technique requires a composite having a greater concentration of resin than in the present invention, because some of the resin flows out of the composite onto the walls of the honeycomb core. This extra resin disadvantageously adds extra weight to the resulting honeycomb structure. On the other hand, lightweight scrim cloth 14 of the present invention acts as a barrier to restrain flow of resin 34. 2) The prior art technique is forced to use the same resin material constituent within the skins as for bonding them to the honeycomb walls. On the other hand, the present invention allows for the resin 34 within the composite skin 16 to be optimized to maximize the strength and stiffness of the skin 16, and simultaneously allows for the adhesive 5 to be optimized to provide maximum bonding strength between skin 16 and honeycomb walls 12. 3) Compared with the present invention, the prior art technique referred to in this paragraph has extremely variable bond strength of skin to core because of the variability of resin flow during cure, which is unacceptable for some applications.

In summary, the prior art does not suggest the novel features of the present invention, in which a less than totally cured composite skin 16 is simultaneously cured and bonded to a honeycomb core 8, and a weight-saving noncontiguous set of adhesive fillets 5 is employed for providing the bond to the core 8.

The invention will now be described further, by way of example, with reference to the accompanying drawings, in which:

Figure 1 is a schematic diagram of a fiber-resin composite prepreg material 7, single or multiple layers of which are suitable for use as a starting skin 16 in the present invention;

Figure 2 is a perspective view of a portion of a honeycomb core 8 usable in the present invention;

Figure 3 is a sketch showing honeycomb 8 prepared for use in the present invention with adhesive fillets 5 positioned on walls 12 thereof;

- 5 -

Figure 4 sketches the state of the honeycomb 8 and skin 16 prior to cocuring;

Figure 5 sketches the state of the end product honey comb structure 50 produced by the present invention;

Figure 6 is a schematic diagram of a composite adhesive-coated fabric 1 suitable as a carrier for adhesive 5;

Figure 7 illustrates a first substep in the process for preparing honeycomb core 8 for use in the present invention; and

Figure 8 illustrates a second substep in the process for preparing honeycomb core 8 for use in the present invention.

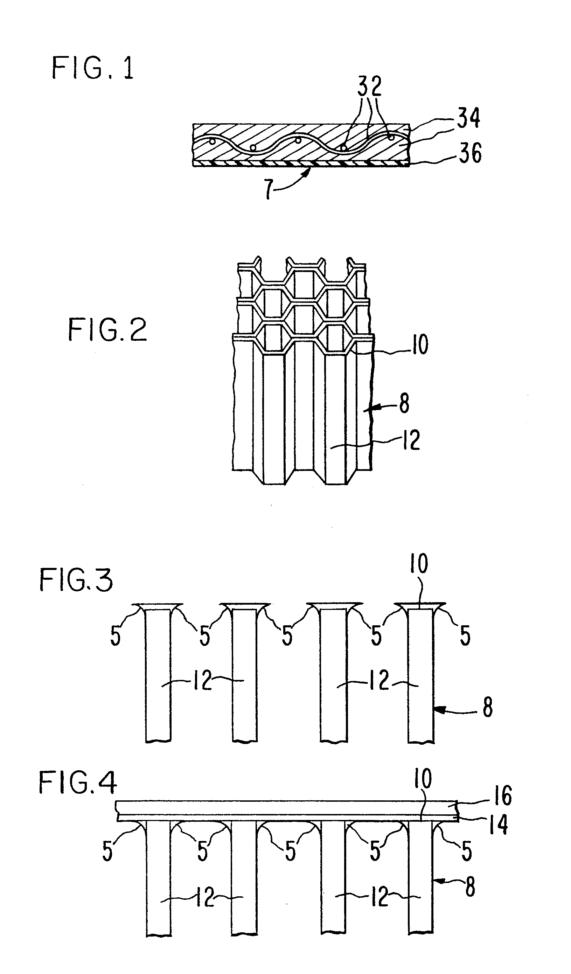

The composite fiber-resin material used as a starting skin 16 consists of single or multiple layers of composite prepreg 7 and is less than totally cured. Thus, composite 16 is still formable and can be readily used to cover a contoured faying surface 10 of honeycomb core 8; however, for purposes of simplicity, the drawings illustrate flat cores 8. Woven fibers 32 are impregnated or coated with less than totally cured (partially cured or uncured) resin 34. Fibers 32 can be metal, graphite, fiberglass or some other suitable material as is well known in the art of fabricating composite materials in which strong lightweight materials are desired. Figure 1 illustrates the embodiment where fibers 32 have been totaly impregnated with resin 34. The thickness of composite prepreg 7 is typically of the order of several millimeters.

Resin 34 is preselected to give maximum strength and stiffness to the skin 16 after curing, and can be a

-6-

material known as 934 resin manufactured by Fiberite, which cures at 350°F, or some other suitable material. Release layer 36 is a film or sheet which provides a means to transport and store composite prepreg 7 prior to its layup into a single- or multiple-layered starting skin 16. A suitable material for layer 36 is polyethylene. Layer 36 permits prepreg 7 to be stored in roll form, in which it can be kept frozen during storage to inhibit curing of resin 34.

Figure 2 shows that honeycomb core 8, which is fabricated of aluminum, fiberglass, Nomex, Kevlar, paper, or some other suitable metal foil or non-metallic material, typically comprises several identical hollow tubes, which have hexagonal cross-sections and are formed by several elongated cell walls 12. Thus, honeycomb core 8 has two (upper and lower) faying surfaces 10, each of which comprises a series of interlinked hexagons. One of surfaces 10 is illustrated in Figure 2. Each hexagon is typically less than an inch across. The height of each wall 12 is typically between a quarter of an inch and four inches. Figure 2 is not drawn to scale in that walls 12 are typically thinner than as illustrated.

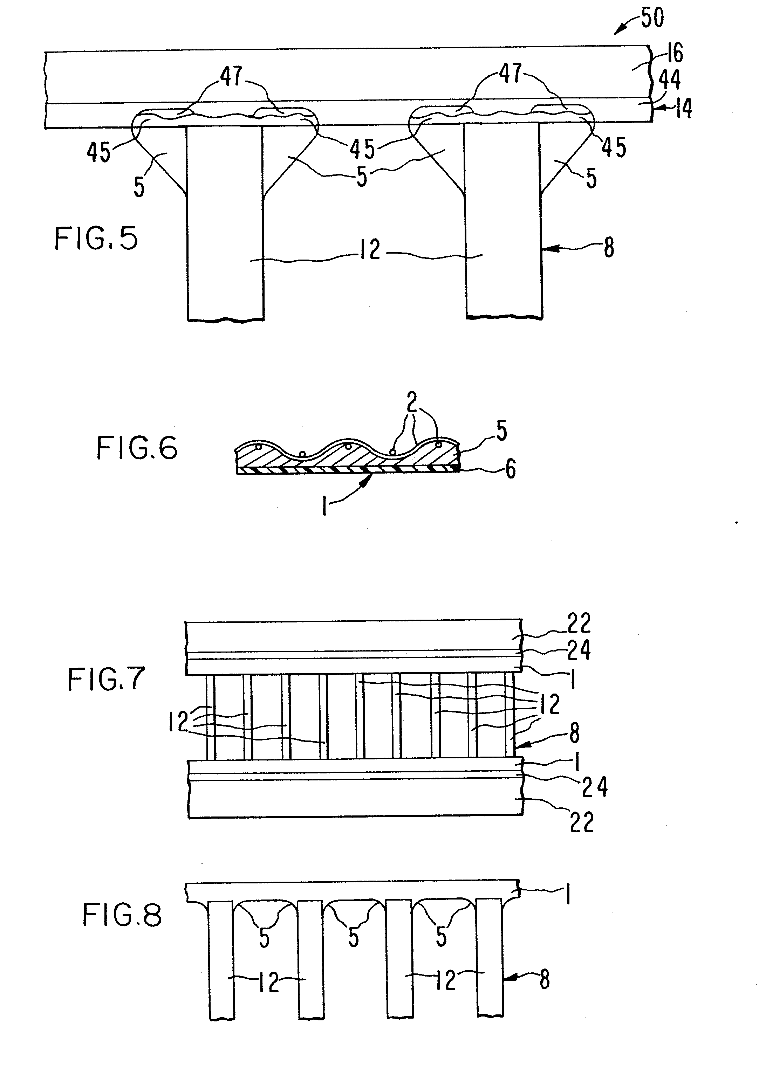

Figure 3 shows that core 8 has been prepared by positioning adhesive fillets 5 on faying surface 10. (Except for Figure 7, the method steps are illustrated with respect to one (the upper) surface 10 only; however, both surfaces 10 could be treated simultaneously, allowing for the effects of gravity, e.g., resin 34 flow is not the problem at lower surface 10 as it is at upper surface 10.) Fillets 5 are not contiguous; thus, weight is saved compared with prior art techniques utilizing contiguous adhesive layers. A preferable method for positioning fillets 5 on surface 10 is described _infra_.

Adhesive 5 is preselected to maximize the bonding strength between core 8 and skin 16. Adhesive 5 is preferably a thermosetting adhesive which cures in stages, and becomes brittle when cooled down or frozen, such as an epoxy, a modified epoxy, or a polyimide. Suitable choices for adhesive 5 are FM 73 manufactured by American Cyanamid, which cures at 250°F, and FM300 by American Cyanamid, which cures at 350°F.

Figure 4 shows that the next step in the process is to place scrim cloth 14 on top of the filleted faying surface 10. Scrim cloth 14 is lightweight, thin (about a mil thick), and absorbent of resin 34 without being so porous as to defeat its resin-restraining purpose. Suitable materials for scrim cloth 14 are nylon, dacron, or other fiber. Cloth 14 can be a woven or knit cloth, or an unwoven mat. Resin 34 forms a better bond to scrim cloth 14 than to core 8 because cloth 14 appears to resin 34 as an extension of fibers 32. The less than totally cured starting skin 16 is then placed on top of scrim cloth 14. As a result of the pressure from cloth 14 and skin 16, most of the fillets 5 are pushed into core 8 along walls 12, resulting in very little adhesive 5 on surface 10, as illustrated in Fig. 4.

The cocuring of adhesive 5 and resin 34 is accomplished at an elevated temperature and preferably under a pressure of approximately 35-50 psi in an autoclave. A vacuum may be advantageously used for some applications. The cure times are typically about two or three hours. The temperature and pressure are usually brought to maximum gradually and returned to ambient gradually. The maximum temperature is the higher of the cure temperatures of the adhesive 5 and resin 34.

Optimum choices of pressure and temperature as a function of time are selected empirically and can advantageously entail techniques of acoustic emission measurements as described in U.S. patent application serial number 402,450 filed July 27, 1982, and commonly assigned with the present invention.

The resulting honeycomb structure 50 is illustrated in Figure 5, in which scrim cloth 14 can be seen to have, typically, three different impregnated regions 44, 45 and

-8-

47. In region 44, some of resin 34 has flowed into cloth 14 during the cocuring step. In region 45, some of adhesive 5 has been absorbed into cloth 14 during cocuring (primarily by means of capillarity). In region 47, some of each of adhesive 5 and resin 34 have flowed or otherwise been absorbed into cloth 14 during cocuring, and have intermixed. This intermixed region 47 does not have the deleterious effect it would have were it positioned abutting a honeycomb wall 12, where resin 34 might dilute the bonding strength of adhesive 5. The avoidance of the malplacement of such a region has been made possible by the use of scrim cloth 14.

Figures 6 through 8 illustrate the preferable method for positioning adhesive fillets 5 onto surface 10 in the Figure 3 position. Figure 6 is a schematic representation of a composite adhesive-coated fabric 1 suitable for use as a carrier for adhesive 5. Woven fibers 2 are impregnated or coated with uncured or partially cured adhesive 5. Figure 6 illustrates the embodiment where fibers 2 have been adhesive-coated only on their lower side, rather than totally impregnated. Fibers 2 may consist of dacron, fiberglass, nylon, rayon, Kevlar, or some other suitable material. Adhesive-coated fabric 1 is typically about 0.010 inch thick.

Release layer 6 is a film or sheet which provides a means to transport and store adhesive-coated fabric 1, yet provides very low adhesion thereto. A suitable material for layer 6 is polyethylene. With the use of layer 6, adhesive-coated fabric 1 may be stored in roll form, and can be kept frozen during storage to inhibit curing of adhesive 5.

A caul press is typically used to apply adhesive-coated fabric 1 to core 8 for flat panels, as illustrated in Figure 7. The caul press comprises upper and lower caul plates 22 for providing a uniform pressure during this step, in which Figure 7 shows adhesive-coated fabric 1 applied in sheet form to both the upper and lower faying surfaces 10, release layers 6 having been removed. A release layer 24 is permanently attached to each caul plate 22 for purposes of insuring that adhesive-coated fabric 1 does not adhere thereto. A suitable release layer 24 is Teflon film or other material which has a high melting point, will not adhere to either the adhesive-coated fabric 1 or to the caul plate 22, and will not contaminate adhesive-coated fabric 1. Under pressure, this assemblage is heated in an oven or press, typically at 200°F for fifteen minutes, to the point where adhesive 5 undergoes a partial but not total cure. At this point, adhesive 5 becomes tacky and adheres to the faying surfaces 10 and adjacent edges of the walls 12.

Figure 8 is an illustration of just the top portion of the coated core 8, showing that adhesive 5 from adhesive-coated fabric 1 has flowed into the interior of core 8 near the upper ends of its walls 12. A similar phenomenon occurs at the lower surface 10 of core 8. The assemblage is removed from the oven or press and brought to room temperature. In this form, the coated core 8 may be stored at room temperature for up to approximately thirty days, depending upon the curing characteristics of the adhesive 5. Storing in this coated, rather than uncoated, form provides superior dust and dirt protection for core 8.

When it is desired to cocure skin 16 onto the core 8, the coated core 8 is cooled down to make adhesive 5 brittle. Normally, this is done by bringing the temperature of the coated core 8 down to approximately 32°F by, e.g., placing it in a freezer for a few minutes or by applying a metal plate which has been precooled.

The brittle adhesive-coated fabric 1 is then peeled off faying surface 10. This results in all of the fabric 2 being removed and a large amount of the partially cured adhesive 5 being pulled off with the fabric 2, but leaving a small amount of adhesive fillets 5 remaining adhered to the faying surface 10 and to the walls 12 adjacent to surface 10, as illustrated in Figure 3.

CLAIMS

1.    A method of making a honeycomb structure by bonding a composite skin member onto a honeycomb core, characterised by the steps of: forming several non-contiguous fillets (5) of less than totally cured adhesive on a faying surface (10) of the core (12); placing a less than totally cured composite sheet (16) containing a resin against the faying surface (10); and heating the core (12) and composite sheet (16) to effect a final cure to each of the adhesive and the resin.

2.    A method as claimed in claim 1, characterised in that, after the fillet forming step and before the heating step, a scrim cloth (14) is interposed between the faying surface (10) and the composite sheet (16).

3.    A method as claimed in claim 1 or claim 2, characterised in that each composite sheet (16) comprises a fiber and a resin; the resin is preselected to optimize the strength of the skin (16) when cured; and the adhesive is preselected, independently of the preselection of the resin, to optimize the bonding strength between the cured skin (16) and the core (12).

4.    A method as claimed in any one of the preceding claims, characterised in that pressure is applied to the core (12) and the composite sheet (16) during the heating step.

5.    A method as claimed in any one of the preceding claims, characterised in that the step of forming adhesive fillets (5) is performed by following the substeps of applying an adhesive-coated fabric (1) against the faying surface (10); heating the adhesive-coated fabric covered honeycomb core (Figure 7) so that some of the adhesive flows out of the fabric (1) and into the core (12) at a region near the faying surface

0136096

(10); cooling the core (10) so that the adhesive becomes brittle; and peeling the fabric (1) away from the core (10) so that the only substance remaining adhered to the core is the flowed adhesive.

6. A honeycomb structure made by the method of any one of the preceding claims.

FIG. 1

FIG.2

FIG.3

FIG.4

2/2

**FIG.5**

**FIG.6**

**FIG.7**

**FIG.8**